# EUROPÄISCHE PATENTSCHRIFT

(11) **EP 2 108 168 B1**
(45) Veröffentlichungstag und Bekanntmachung des Hinweises auf die Patenterteilung: **07.08.2013**
(21) Anmeldenummer: 07858112.1
(22) Anmeldetag: 21.12.2007
(51) Int. Cl.: G06K 19/073, G06K 19/077, G06K 7/10, B42D 15/00, B42D 15/10, G07D 7/00, G02F 1/13357, G06K 19/07

(54) **DOKUMENT MIT EINEM OPTISCHEN SENDER**
DOCUMENT WITH AN OPTICAL TRANSMITTER
DOCUMENT MUNI D'UN ÉMETTEUR OPTIQUE

(30) Priorität: 10.01.2007 DE 102007002385
(43) Veröffentlichungstag der Anmeldung: 14.10.2009
(73) Patentinhaber: Bundesdruckerei GmbH, 10958 Berlin (DE)
(72) Erfinder: PAESCHKE, Manfred, 16348 Wandlitz (DE); PFLUGHOEFFT, Malte, Berlin 13347 (DE); FISCHER, Jörg, 13053 Berlin (DE)
(74) Vertreter: Richardt Patentanwälte GbR
(86) Internationale Anmeldenummer: PCT/EP2007/064502
(87) Internationale Veröffentlichungsnummer: WO 2008/083921

(56) Entgegenhaltungen:
- WO-A-03/003291
- WO-A-2006/021551
- WO-A-2006/071477
- US-A1- 2003 011 868
- US-A1- 2006 115 110

## Beschreibung

Die Erfindung betrifft ein Dokument, insbesondere ein Wert- oder Sicherheitsdokument, ein Lesegerät für ein solches Dokument und ein Kommunikationsverfahren.

Dokumente mit einem integrierten elektronischen Schaltkreis sind aus dem Stand der Technik an sich in verschiedener Form bekannt. Beispielsweise gibt es solche Dokumente in überwiegend papierbasierter Form, wie zum Beispiel als elektronischen Reisepass, oder als Chipkatte, insbesondere als so genannte Smart Card, in kontaktbehafteter, kontaktloser oder Dual-Interface Ausführung.

Insbesondere sind verschiedene Funk-Erkennungssysteme für solche Dokumente aus dem Stand der Technik bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Labet oder Funketikett bezeichnet; die Sende-Empfangseinheit wird auch als Lesegerät oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld, Die Entfernung, über die ein RFID-Transponder angesprochen und ausgelesen werden kann, schwankt aufgrund der Ausführung (passiv / aktiv), dem benutzten Frequenzband, der Sendestärke und anderen Umwelteinflüssen zwischen wenigen Zentimetern und mehr als einem Kilometer.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen im Gegensatz zu passiven Transpondern ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing. Des Weiteren werden diese in Papier oder Kunststoff, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente werden im Stand der Technik zum Teil als Chipkarten realisiert. Chipkarten können eine integrierte Anzeigevorrichtung aufweisen, wie es z.B. aus EP 0920675, WO2004/080100 und US 6,019,284 bekannt ist.

Zum Beispiel aus der US 6,019,284 und der EP 0 920 675 sind flexible Karten mit Displays bekannt. Diese Karten haben jedoch nur ein einziges Anzeigeelemente. Aus der US 6,340,965 B1 ist ferner elektronisches Papier bekannt, durch welches ein wieder verwendbares Formular gebildet wird.

Von der Firma AU Optronics ist ferner ein zweiseitiges OLED-Display vorgestellt worden, das auf seiner Vorder- und Rückseite unabhängig voneinander zwei Farbbilder darstellen kann. Solche Displays sind für die Anwendung in Handys vorgesehen. Aus der WO 03/009059 A1 ist ein elektrophoretisches Display mit Mikrosphären oder Mikrocups bekannt geworden.

Sicherheits- oder Wertdokumente können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten, Chipkarten-Kommunikationsprotokolle und - verfahren sind zum Beispiel in der Norm ISO 14443 festgelegt.

Ein Nachteil solcher Dokumente mit RFID-Funktionalität ist, dass ohne Einverständnis des Trägers des Dokuments die RFID-Schnitstelle angesprochen werden kann, wenn sich das Dokument beispielsweise in der Brieftasche des Trägers befindet. Ein Schutzmechanismus für Reisedokumente zum Schutz gegen unbefugtes Auslesen der Daten aus einem solchen Dokument ist als "Basic Access Control" bekannt, vgl. hierzu "Machine Readable Travel Documents, Technical Report, PKI for Machine Readable Travel Documents Offering ICC Read-Only Access, Version 1,1, Oktober 01, 2004, Internatiorial Civil Aviation Organisation (ICAO).

Aus dem Stand der Technik sind ferner Verfahren bekannt, Daten unter kryptographischem Schutz elektronisch zu speichern. Eine in den vergangenen zwei Solche Sicherheits- oder Werdokumente werden im Stand der Technik zum Teil als Chipkarten realisiert, Chipkarten können eine integrierte Anzeigevorrichtung aufweisen, wie es z.B. aus EP 0920875, WO2004/0800100 und US 6,019,284 bekannt ist.

Zum Beispiel aus der US 6,019,284 und der EP 0 920 675 sind flexible Karten mit Display bekannt, Diese Karten haben jedoch nur ein einziges Anzeigeelement. Aus der US 6,340,965 B1 ist ferner elektronisches Papier bekannt, durch welches ein wieder verwendbares Formular gebildet wird.

Von der Firma AU Optronics ist ferner ein zweiseitiges OLED-Display vorgestellt worden, das auf seiner Vorder- und Rückseite unabhängig voneinander zwei Farbbilder darstellen kann. Solche Disdays sind für die Anwending in Handys vorgesehen. Aus der WO 03/009059 A1 ist ein elektrophoretisches Display mit Mikrosphären oder Mikrocups bekannt geworden.

Sicherheits- oder Wertdokumente können mit einer kontaktbehafreten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-interface Chipkarten. Chipkarten-Kommunkationsprotokolle und verfahren sind zum Beispiel in der Norm ISO 14443 festgeiegt.

Ein Nachteil solcher Dokumente mit RFID-Funktionalität ist, dass ohne Einverständnis des Trägers des Dokuments die RFID-Schnittstelle angesprochen werden kann, wenn sich das Dokument beispielsweise in der Brieftasche des Trägers befindet. Ein Schutzmechanismus für Reisedokumente zum Schuts gegen unbefugtes Auslesen der Daten aus einem solchen Dokument ist als "Basic Access Control" bekannt, vgl. hierzu "Machine Readable Travel Documents". Technical Report, PKI for Machine Readable Travel Documents Offering ICC Read-Only Acsess, Version 1.1, Oktober 01, 2004, International Civil Aviation Organisation (ICAO) http://www.csca-si.gov.si/TR-PKI mrtds ICC read-only access v1 1.pdf

Aus dern Stand der Technik sind ferner Verfahren bekannt. Daten unter kryptographischem Schutz elektronisch zu speichern. Eine 15 den vergangenen zwei Jahrzenten zu großer Verbreitung gelangte Form geschützter Speicher sind elektronische Chipkarten, die durch ISO 7816 Teil 1 bis 4 normiert sind. Zu den Anwendungsgebieten der Chipkartentechnologie gehört die Einführung maschinenlesbarer Reisedokumente, von der eine Erhöhung der Sicherheit wie auch der Effizienz der Passagierkontrollen insbesondere in der weltweiten Luftfahrt erhofft wird.

Aus der zum Anmeldezeitpunkt unveröffentlichten DE 10 2006 031 422.0 derselben Anmelderin ist ein Wert- oder Sicherheitsdokument mit einer Anzeigevorrichtung bekannt, die ein optisches Signal abgibt, das in einem visuell wahrnehmbaren optischen Bereich liegt, aber aufgrund seiner Widerholfrequenz bedingt durch die Trägheit des menschlichen Auges nicht wahrnehmbar ist.

Aus der DE 103 17 257 A1 ist ein kontaktlosen Datenträger mit einen LCD-Display bekannt, auf dem eine Information optisch angezeigt werden kann. Die Information kann auch zufällig generierte Datenstrukturen enthalten (vgl. Abschnitt 0010 der DE 103 17 257 A1). Die Anzeige der zufällig generierten Datenstrukturen auf einem üblichen LCD-Display ist für den Benutzer augenfällig und ohne weiteres visuell wahrnehmbar. Dies erleichtert eine Nachstellung des kontaktlosen Datenträgers sowie ein Ausspähen der Daten.

Aus WO 2006/071477 A1 ist eine RFID-Vorrichtung mit einem visuellen Indikator bekannt, der infrarotes oder ultraviolettes Licht abstrahlt.

Aus US 2006/0115110 A1 ist ein Sicherheitsdokument bekannt, welches ein Wasserzeichen und ein OLED-Display aufweist.

Aus US 2003/0011868 A1 ist ein elektrophoretisches Display bekannt.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen abgegeben.

Erfingdungsgemäß wird ein Dokument, insbesondere ein Wert- oder Sicherheitsdokument, mit einem optischen Sender zur Ausgabe mindestens eines maschinenlesbaren optischen Signals in einem visuell für das menschliche Auge nicht wahrnehmbaren spektralen Bereich geschaffen.

Die Erfindung ermöglicht es also, Daten verschiedener Art auf optischem Wege aus einem Wert- oder Sicherheitsdokument auszugeben, wie zum Beispiel kryptographische Schlüssel, verschlüsselte und/oder signierte Informationen, Transaktionsnummern, Bar-Codes, eine Gültigkeitsdauer, Berechtigungsinformationen, Personalisierungsdaten oder dergleichen, und zwar so, dass dies für einen Benutzer ohne technische Hilfsmittel visuell mit wahrnehmbar ist.

Erfindungsgemäß wird dadurch eine Alternative zu vorbekannten Wert- oder Sicherheitsdokumenten geschaffen. Im Vergleich zu vorbekannten Wert- oder Sicherheitsdokumenten, bei denen die Signalausgabe über Radiowellen erfolgt, haben Ausführungsformen der Erfindung den Vorteil, dass eine Datenausgabe aus dem Wert- oder Sicherheitsdokument nicht unbemerkt, ohne Zustimmung des Trägers des Dokuments erfolgen kann, da ja eine optische Verbindung mit dem Lesegerät herstellbar sein muss, was nur dann der Fall ist, wenn sich das Dokument außerhalb z.B. der Brieftasche des Trägers des Dokuments befindet. Dies ist insbesondere für solche Dokumente vorteilhaft, welche nicht wie z.B. maschineniesbare Reisedokumente (Machine Readable Travel Documents - MRTDs) mittels normierter Verfahren abgesichert sind.

Der optische Sender wird erfindungsgemäß durch eine Anzeigevorrichtung implementiert. Die Anzeigevorrichtung ist so ausgebildet, dass sie zusätzlich zur Bildwiedergabe in einem visuell wahrnehmbaren optischen Bereich ein maschinenlesbares optisches Signal in einem visuell nicht wahrnehmbaren optischen Bereich ausgeben kann.

Unter "Bildwidergabe" wird hier die Wiedergabe von verschiedenen Daten verstanden, insbesondere Bilddaten, wie z.B. eines Gesichtsbildes des Trägers des Dokuments, textuellen Angaben, und/oder Barcodes oder dergleichen. Neben einer solchen Bildwiedergabe, die für einen Benutzer visuell wahrnehmbar ist, gibt die Anzeigevorrichtung ein optisches Signal ab, das der Benutzer nicht visuell wahrnehmen kann. Die Abgabe dieses Signal bleibt dem Benutzer und einem potentiellen Fälscher also verborgen, was die Nachstellung des Dokuments und die Ausspähung der mit dem Signal übertragenen Daten erschwert.

Ausführungsformen der Erfindung sind ferner hinsichtlich einer verbesserten Fälschungssicherheit und einer verbesserten Sicherheit gegen Manipulationen gegenüber dem Stand der Technik vorteilhaft. Die Ausführung eines Wert- oder Sicherheitsdokuments mit einer Anzeigevorrichtung zur Ausgabe eines maschinenlesbaren optischen Signals, welches durch einen Benutzer nicht visuell erfassbar ist, ist nämlich kaum durch einen Fälscher kopier- oder manipulierbar.

Nach einer Ausführungsform der Erfindung ist der optische Sender zur Abstrahlung in einem Infrarot- (IR) und/oder ultraviolett (UV) spektralen Bereich ausgebildet. Beispielsweise beinhaltet der optische Sender eine oder mehrere IR- und/oder UV-Leuchtdioden (LEDs).

Nach einer Ausführungsform der Erfindung hat das Dokument einen Dokumentenkörper, der papier- und/oder kunststofibasiert sein kann. Die Anzeigevorrichtung des Dokuments ist in den Dokumentenkörper integriert.

Bei der Anzeigevorrichtung kann es sich um eine segmentierte Anzeigevorrichtung handeln, beispielsweise eine Anzeigevorrichtung mit der Möglichkeit der direkten elektrischen Adressierung einzelner Displaysegmente, insbesondere Wort- und Bitleitungen zur Ansteuerung einzelner Segmente. Nach einer weiteren Ausführungsform handelt es sich bei der Anzeigevorrichtung um ein Segmentdisplay, eine Aktiv- oder Passivmatrix.

Nach einer Ausführungsform der Erfindung handelt es sich bei der Anzeigevorrichtung um eine LED-Anzeige, LCD-Anzeige, Anzeige auf der Basis des Elektrowettingeffektes, bistabile Anzeige, insbesondere eine elektrophoretische oder Drehelement-Anzeige, oder eine semi-bistabile Anzeige, wie zum Beispiel eine elektrochrome Anzeige.

Nach einer Ausführungsform der Erfindung hat das Dokument einen vor der Anzeigevorrichtung angeordneten Filter zum Durchlass von Strahlung in dem visuell nicht wahrnehmbaren spektralen Bereich.

Nach einer Ausführungsform der Erfindung ist die Anzeigevorrichtung reflektiv oder transmissiv ausgebildet

Nach einer Ausführungsform der Erfindung hat die Anzeigevorrichtung erste und zweite Anzeigeelemente, die in einem visuell wahrnehmbaren spektralen Bereich dieselbe Farbe haben. Nur die ersten Anzeigeelemente wirken in dem visuell nicht wahrnehmbaren spektralen Bereich absorbierend. Die zweiten Anzeigeelemente können in dem visuell nicht wahrnehmbaren spektralen Bereich beispielsweise transparent oder reflektierend wirken, sodass sich in dem visuell nicht wahrnehmbaren spektralen Bereich ein durch einen optischen Sensor erfassbarer Kontrast ergibt.

Nach einer Ausführungsform der Erfindung hat die Anzeigevorrichtung neben den ersten und zweiten Anzeigeelementen dritte Anzeigeelemente, die eine andere Farbe in dem visuell wahrnehmbaren spektralen Bereich als die Farbe der ersten und zweiten Anzeigeelemente aufweisen. Aufgrund der verschiedenfarbigen Anzeigeelemente ermöglicht eine solche Anzeigevorrichtung eine visuell und auch kognitiv erfassbare Anzeige in einen visuell wahrnehmbaren spektralen Bereich.

Nach einer Ausführungsform, der Erfindung beinhaltet die Anzeigevorrichtung Anzeigeelemente, die in dem visuell nicht wahrnehmbaren spektralen Bereich absorbierend wirken. Diese Anzeigeelemente befinden sich in einer Flüssigkeit, die in dem visuell nicht wahrnehmbaren spektralen Bereich nicht absorbierend wirkt, sondern im Wesentlichen transparent ist. Durch Ansteuerung der Anzeigeelemente kann ein Kontrast in dem visuell nicht wahrnehmbaren spektralen Bereich erzeugt werden, der durch einen optischen Sensor erfassbar ist.

Nach einer Ausführungsform der Erfindung hat die Anzeigevorrichtung mehrere Pixel. Zumindest eine Teilmenge der Pixel hat jeweils einen zusätzlichen Sub-Pixel zur Ausgabe des maschinenlesbaren optischen Signals in dem visuell nicht wahrnehmbaren spektralen Bereich. Beispielsweise hat jeder Pixel statt der üblichen drei Sub-Pixel für die Farben rot, grün und blau einen zusätzlichen Sub-Pixel zur Ausgabe des maschinenlesbaren optischen Signals, beispielsweise in einem IR- oder UV-Bereich.

Nach einer Ausführungsform der Erfindung ist die Anzeigevorrichtung neben der Ausgabe des maschinenlesbaren optischen Signales zur Anzeige von Daten zur nur visuellen oder auch kognitiven Erfassung durch einen Benutzer ausgebildet. Beispielsweise werden also auf der Anzeigevorrichtung Daten im Klartext angezeigt, die ein Benutzer visuell erfassen und ohne weiteres verstehen kann.

Nach einer Ausführungsform der Erfindung ist die Anzeigevorrichtung zur Ausgabe von einem oder mehreren der maschinenlesbaren optischen Signale für eine serielle und/oder parallel Datenübertragung ausgebildet. Die Modulation des optischen Signals erfolgt dabei beispielsweise durch Amplituden-, Pulsweiten-, Phasen- und/oder Frequenzmodulation.

Nach einer Ausführungsform der Erfindung hat das Wert- oder Sicherheitsdokument eine Ansteuerschaltung für die Anzeigevorrichtung, wobei die Ansteuerschaltung als Treiber zur Ansteuerung der Anzeigevorrichtung für die Ausgabe des maschinenlesbaren optischen Signals und/oder für die Anzeige der Daten dient.

Nach einer Ausführungsform der Erfindung hat das Wert- oder Sicherheitsdokument einen integrierten elektronischen Schaltkreis zur Ansteuerung der Anzeigevorrichtung und zur Modulation des maschinenlesbaren optischen Signals. Insbesondere kann der integrierte elektronische Schaltkreis zum Zugriff auf einen Datenspeicher des Wert- oder Sicherheitsdokuments dienen, um aus diesem Datenspeicher ausgelesene Daten oder auf der Basis dieser Daten generierte weitere Daten in der Form eines maschinenlesbaren optischen Signals und/oder im Klartext über die Anzeigevorrichtung auszugeben.

Nach einer Ausführungsform der Erfindung hat das Wert- oder Sicherheitsdokument einen integrierten elektronischen Schaltkreis zur Durchführung eines kryptographischen Protokolls, wobei die Ausgabe des maschinenlesbaren optischen Signals und/oder die Anzeige der Daten auf der Anzeigevorrichtung von der vorherigen erfolgreichen Durchführung des kryptographischen Protokolls abhängt. Dadurch ist gewährleistet, dass eine Ausgabe bzw. Anzeige über die Anzeigevorrichtung nur bei Vorliegen einer entsprechenden Berechtigung erfolgt.

Nach einer Ausführungsform der Erfindung wird durch die Anzeigevorrichtung eine Information gesendet, die für die Durchführung des kryptographischen Protokolls verwendet wird. Bei der Information kann es sich um eine Kennung, ein Chiffrat, einen kryptographischen Schlüssel oder dergleichen handeln. Beispielsweise wird auf der Grundlage dieser Information ein Challenge-Response-Verfahren oder dergleichen durchgeführt.

Nach einer Ausführungsform der Erfindung handelt es sich bei dem Dokument um ein Ausweisdokument, insbesondere einen Personalausweis, einen Reisepass, ein Visum oder einen Firmenausweis, eine Kreditkarte, einen Führerschein, einen Berechtigungsnachweis oder dergleichen.

Nach einer Ausführungsform der Erfindung handelt es sich um ein papierbasiertes Dokument oder eine Chipkarte.

Nach einer Ausführungsform der Erfindung hat das Wert- oder Sicherheitsdokument eine Schnittstelle zur Energieversorgung der Anzeigevorrichtung, des integrierten elektronischen Schaltkreises und/oder der Ansteuerschaltung und/oder zur Kommunikation mit einem Lesegerät. Die Schnittstelle kann kontaktbehaftet oder kontaktlos, insbesondere als RFID-Schnittsteile ausgebildet sein. Ferner kann die Schnittstelle auch als so genanntes Dual Mode Interface ausgebildet sind. Die Schnittstelle kann auf einer elektrischen, kapazitiven, induktiven, magnetischen, optischen oder einer anderen physikalischen Kopplungsmethode beruhen. Für kontaktlose Kopplung über eine Antenne, kann diese beispielsweise als Spule, Dipol oder in Form von kapazitiven Flächen ausgebildet sein.

Beispielsweise hat die Schnittstelle eine Antenne, insbesondere eine RFID-Antenne, zur Einkopplung der elektrischen Energie von einem externen Schreib- und/oder Lesegerät. Alternativ oder zusätzlich kann das Wert- oder Sicherheitsdokument aber auch über eine integrierte Energieversorgung, wie zum Beispiel eine Batterie, eine Photozelle oder dergleichen verfügen.

Nach einer Ausführungsform der Erfindung wird die Anzeigevorrichtung zur Anzeige und/oder Ausgabe in Form des maschinenlesbaren Signals von zeitlich veränderlicher Information angesteuert. Hierbei kann es sich um Informationen handeln, die sich in Abhängigkeit von der Zeit und/oder dem Datum ändert, oder um sich zyklisch ändernde Information.

In einem weiteren Aspekt betrifft die Erfindung ein Kommunikationsverfahren für ein Wert- oder Sicherheitsdokument, wobei eine Datenausgabe durch Ausgabe eines maschinenlesbaren optischen Signals über einen optischen Sender des Wert- oder Sicherheitsdokuments erfolgt, wobei das maschinenlesbare optische Signal in einem visuell für das menschliche Auge nicht wahrnehmbaren spektralen Bereich liegt.

Nach einer Ausführungsform der Erfindung dient die Anzeigevorrichtung neben der Ausgabe des maschinenlesbaren optischen Signals auch zur Anzeige von Daten zur kognitiven Erfassung durch einen Benutzer, d.h. beispielsweise im Klartext.

In einem weiteren Aspekt betrifft die Erfindung ein Lesegerät für ein erfindungsgemäßes Wert- oder Sicherheitsdokument. Das Lesegerät ist zum Empfang des maschinenlesbaren optischen Signals des Wert- oder Sicherheitsdokuments ausgebildet.

im Weiteren werden Ausführungsbeispiele der Erfindung mit Bezugnahme auf die Zeichnungen näher erläutert. Es zeigen:
- Figur 1: eine schematische Explosionsdarstellung einer ersten Ausführungsform eines erfindungsgemäßen Dokuments,
- Figur 2: eine Draufsicht einer weiteren Ausführungsform eines erfindungsgemäßen Dokuments,
- Figur 3: einen schematischen Querschnitt einer Ausführungsform eines erfindungsgemäßen Dokuments mit einer transmissiven oder emissiven Anzeigevorrichtung,
- Figur 4: einen schematischen Querschnitt einer Ausführungsform eines erfindungsgemäßen Dokuments mit einer reflektiven Anzeigevorrichtung,
- Figur 5: eine schematische Explosionsdarstellung einer Ausführungsform einer erfindungsgemäßen Anzeigevorrichtung basierend auf einer monochrom Flüssigkristallanzeige,
- Figur 6: eine schematische Explosionsdarstellung einer Ausführungsform einer erfindungsgemäßen transmissiven Anzeigevorrichtung,
- Figur 7: eine schematische Schnittansicht einer erfindungsgemäßen elektrophoretischen Anzeigevorrichtung,
- Figur 8: eine schematische Schnittansicht einer weiteren Ausführungsform einer erfindungsgemäßen Anzeigevorrichtung basierend auf einem elektrophoretischen Display,
- Figur 9: einen schematischen Querschnitt einer weiteren Ausführungsform einer erfindungsgemäßen Anzeigevorrichtung basierend auf einem elektrophoretischen Display,
- Figur 10: eine schematische Explosionsdarstellung einer Ausführungsform einer erfindungsgemäßen Anzeigevorrichtung mit zusätzlichen Sub-Pixeln,
- Figur 11: ein Blockdiagramm einer Ausführungsform eines erfindungsgemäßen Dokuments und eines dafür vorgesehenen Lesegeräts,
- Figur 12: ein von einer erfindungsgemäßen Anzeigevorrichtung angezeigtes Bild und dessen Teilbilder in verschiedenen spektralen Bereichen,
- Figur 13: ein Flussdiagramm einer Ausführungsform eines erfindungsgemäßen Kommunikationsverfahrens.

Elemente der nachfolgenden Figuren, die einander entsprechen, sind mit denselben Bezugszeichen gekennzeichnet.

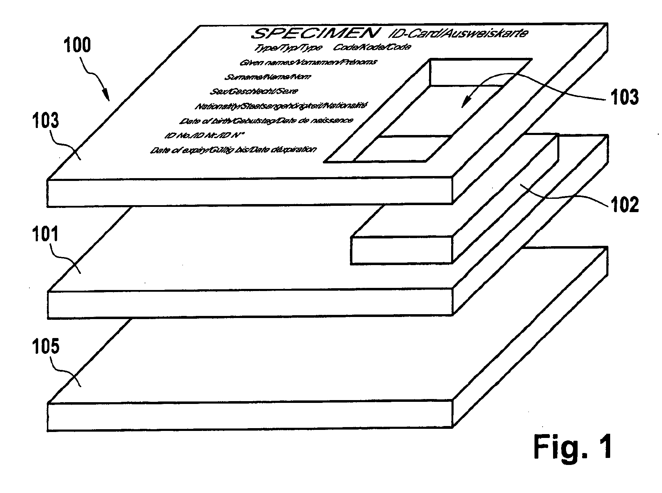

Die Figur 1 zeigt ein Dokument 100, das kartenförmig ausgebildet ist. Das Dokument 100 hat ein Inlay 101 zwischen einer bedruckten und personalisierten Vorderseite 103 und einer Rückseite 105. Zusätzlich kann das Dokument 100 weitere Schichten beinhalten, die hier der Übersichtlichkeit halber nicht dargestellt sind.

Auf der Vorderseite 103 sind Personalisierungsinformationen aufgedruckt, wie zum Beispiel Name, Geschlecht, Nationalität, etc. des Trägers des Dokuments 100. Ferner kann das Dokument 100 Sicherheitsmerkmale tragen, wie zum Beispiel Liniendruck oder dergleichen.

Die Figur 1 zeigt eine Ausführungsform des Dokuments 100, bei der der Sender, also die Anzeigevorrichtung 102, in die Vorderseite 103 integriert ist. Hierzu hat die Vorderseite 103 eine entsprechende Öffnung 109, die zur Aufnahme der Anzeigevorrichtung 102 dient. Die Anzeigevorrichtung 102 ist neben der Ausgabe des maschinenlesbaren Signals in dem visuell nicht wahrnehmbaren spektralen Bereich auch zur Ausgabe eines visuell und gegebenenfalls auch kognitiv erfassbaren optischen Signals ausgebildet sein, welches ohne technische Hilfsmittel durch einen menschlichen Benutzer visuell wahrnehmbar und interpretierbar ist.

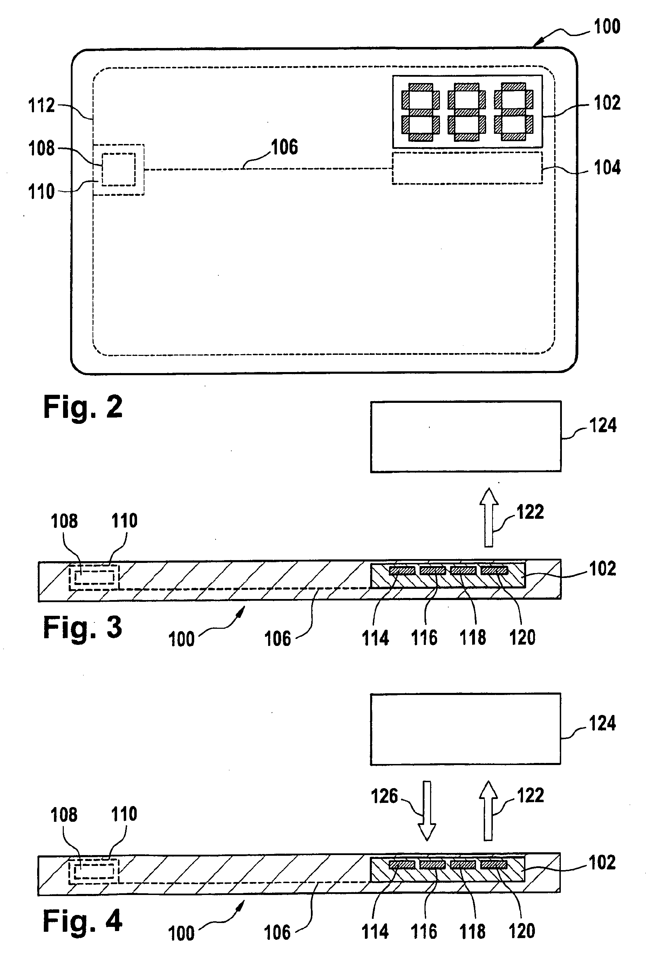

Die Figur 2 zeigt eine Ausführungsform eines erfindungsgemäßen Dokuments 100. Bei dem Dokument 100 handelt es sich um ein Wert- oder Sicherheitsdokument, wie zum Beispiel ein Ausweisdokument, insbesondere einen Personalausweis, einen Reisepass, ein Visum oder einen Firmenausweis, eine Kreditkarte, einen Führerschein, einen Berechtigungsnachweis oder dergleichen.

In der hier betrachteten Ausführungsform hat das Dokument 100 eine einzige Anzeigevorrichtung 102, wie zum Beispiel eine Photolumineszenz-Löschungsanzeige, eine elektrophoretische Anzeige, eine elektrochrome Anzeige, eine Flüssigkeitskristallanzeige (LCD), LED-Anzeige, insbesondere anorganische LED oder organische LED-Anzeige (OLED), Drehelementanzeige, Balkenanzeige oder einer Anzeige auf Basis des Elektrowetting-Effektes oder ein flexibles Display, wie es z.B. von der Firma Citala (http: www. citala. com) erhältlich ist oder eine Hybridanzeige. Eine Hybridanzeige ist eine Anzeige, die eine Kombination verschiedenen Anzeigen darstellt. Vorzugsweise werden flexible Displays eingesetzt.

Zur Ansteuerung der Anzeigevorrichtung 102 dient ein Treiber 104. Der Treiber 104 ist über eine Datenleitung 106 mit einem integrierten elektronischen Schaltkreis 108 verbunden. Der Treiber 104 kann auch einen integralen Bestandteil des integrierten elektronischen Schaltkreises 108 bilden.

Der integrierte elektronische Schaltkreis 108 kann sich in einem so genannten Modul 110 befinden, insbesondere einem Chipkartenmodul. Durch das Modul 110 wird eine kontaktbehaftete oder kontaktlose Schnittstelle oder eine Dual-Interface-Schnittstelle für die Kommunikation mit dem integrierten Schaltkreis 108 gebildet.

Das Dokument 100 kann ferner eine oder mehrere Antennen 112 aufweisen. Die Antenne 112 ist mit dem Modul 110 verbunden. Die Antenne 112 kann für die Energieversorgung des integrierten Schaltkreises 108, des Treibers 104 undloder der Anzeigevorrichtung 102 dienen. Hierzu wird von einem externen Gerät elektrische Energie mit Hilfe der Antenne 112 eingekoppelt. Alternativ oder zusätzlich dient die Antenne 112 zur drahtlosen Kommunikation mit einem externen Gerät, beispielsweise über ein RFID-Verfahren.

Der integrierte elektronische Schaltkreis 108 generiert ein Steuersignal, das über die Datenleitung 106 zu dem Treiber 104 übertragen wird. Durch das Steuersignal wird der Treiber 104 so angesteuert, so dass über die Anzeigevorrichtung 102 ein maschinenlesbares optisches Signal in einem visuell nicht wahrnehmbaren spektralen Bereich ausgegeben wird.

Beispielsweise ist die Anzeigevorrichtung 102 als Segment- oder Matrixdisplay ausgebildet Die Ausgabe des maschinenlesbaren optischen Signals erfolgt dann beispielsweise durch Ansteuerung von einem oder mehreren der Anzeigeelemente durch den Treiber 104. Dem über die Anzeigevorrichtung 102 ausgegebenen optischen Signal ist aufgrund einer entsprechenden Ansteuerung des Treibers 104 von den integrierten elektronischen Schaltkreis 108 eine Information aufmoduliert, beispielsweise durch Amplituden-. Pulsweiten-, Phasen- und/oder Frequenzmodulation.

wenn das optische Signal eine Trägerfrequenz zum Beispiel im IR oder UV Bereich aufweist, kann es von einem Benutzer nicht wahrgenommen werden. Ausführungsformen des Dokuments 100 ermöglichen zusätzlich die Ausgabe des maschinenlesbaren optischen Signals in einer visuell durch den Benutzer erfassbaren Form, beispielsweise in Form eines 2D-Bar-Codes oder dergleichen, und zwar auf derselben Anzeigevorrichtung 102 des Dokuments 100. Auch in diesem Fall kann jedoch das optische Signal von dem Benutzer nicht kognitiv erfasst werden, da dieses ausschließlich für die maschinelle Auswertung und Weiterverarbeitung vorgesehen ist. Es kann aber auch zusätzlich zu dem maschineniesbaren optischen Signal ein visuell und kognitiv durch den Benutzer erfassbares Signal von der Anzeigevorrichtung 102 ausgegeben werden.

Insbesondere können über die Anzeigevorrichtung 102 in Form des maschinenlesbaren optischen Signals sensitive Informationen, wie zum Beispiel kryptographische Schlüssel, verschlüsselte und/oder signierte Informationen, Transaktionsnurnmern, Berechtigungsinformationen, Personatisierungsdaten, biometrische Daten und dergleichen ausgegeben werden.

Ergänzend können diese Informationen ganz oder teilweise auch im Klartext durch entsprechende Ansteuerung des Treibers 104 seitens des integrierten elektronischen Schaltkreises 108 auf der Anzeigevorrichtung 102 dargestellt werden. Ferner ist es möglich, dass bestimmte Informationen nur in Form des maschinenlesbaren optischen Signals und andere Informationen nur im Klartext Ober die Anzeigevorrichtung 102 ausgegeben werden.

Alternativ oder zusätzlich zu der Antenne 112 kann das Dokument 100 über eine interne Energiequelle wie zum Beispiel eine Batterie oder eine Solarzetle verfügen. In einer weiteren Ausführungsform kann das Dokument über eine kontaktbehaftete Schnittstelle verfügen, über welche die Energie zur Verfügung gestellt wird. Für eine externe Energieversorgung über die Antenne 112 kann diese beispielsweise als Spule, Dipol oder in Form von kapazitiven Flächen ausgebildet sein. Die Antenne 112 kann zum Beispiel nur für die Energieversorgung der Anzeigevorrichtung 102 und/oder des integrierten elektronischen Schaltkreises 108 und/oder des Treibers 104 verwendet werden oder sie kann alternativ oder zusätzlich auch für den Aufbau einer Kommunikationsverbindung zum Senden und/oder Empfangen von Daten von einem externen Gerät verwendet werden, insbesondere einer RFID Kommunikationsverbindung.

Die Figur 3 zeigt einen schematischen Querschnitt durch eine Ausführungsform eines erfindungsgemäßen Dokuments 100. Bei dieser Ausführungsform ist die Anzeigevorrichtung 102 in Anzeigeelemente oder Segmente 114, 116, 118 und 120 aufgeteilt, d.h. es handelt sich um ein Segment-/Aktiv- oder Passivmatrixdisplay. Eines oder mehrere der Segmente 114 bis 120 werden von dem integrierten elektronischen Schaltkreis 108 über den Treiber 104 zur Ausgabe eines maschinenlesbaren optischen Signals 122 angesteuert, welches von einem externen Gerät 124 empfangen wird. Das Gerät 124, welches hier als Lesegerät ausgebildet ist, demoduliert das optische Signal 122, um die darin empfangenen Informationen zu erhalten. Diese Informationen werden durch das Gerät 124 maschinell weiterverarbeitet und/oder ausgegeben, beispielsweise für Kontrollzwecke.

Beispielsweise ist zumindest eines der Segmente zur Abstrahlung des maschinenlesbaren optischen Signals 122 in einem visuell nicht wahrnehmbaren spektralen Bereich ausgebildet,.wohingegen andere der Segmente zur Abstrahlung eines visuell erfassbaren weiteren optischen Signals ausgebildet sind.

Bei einer Ausführungsform der Anzeigevorrichtung 102 der Figur 3 handelt es sich um ein transmissives Display mit Hintergrundbeleuchtung im nicht-sichtbaren Bereich des Lichts,

Die Figur 4 zeigt eine alternative Ausführungsform, bei der die Anzeigevorrichtung reflektiv ausgebildet ist. In diesern Fall generiert das Gerät 124 einen optischen Lesestrahl 126, um das von der Anzeigevorrichtung 102 in einem visuell nicht wahrnehmbaren spektralen Bereich ausgegebene Signal zu erfassen.

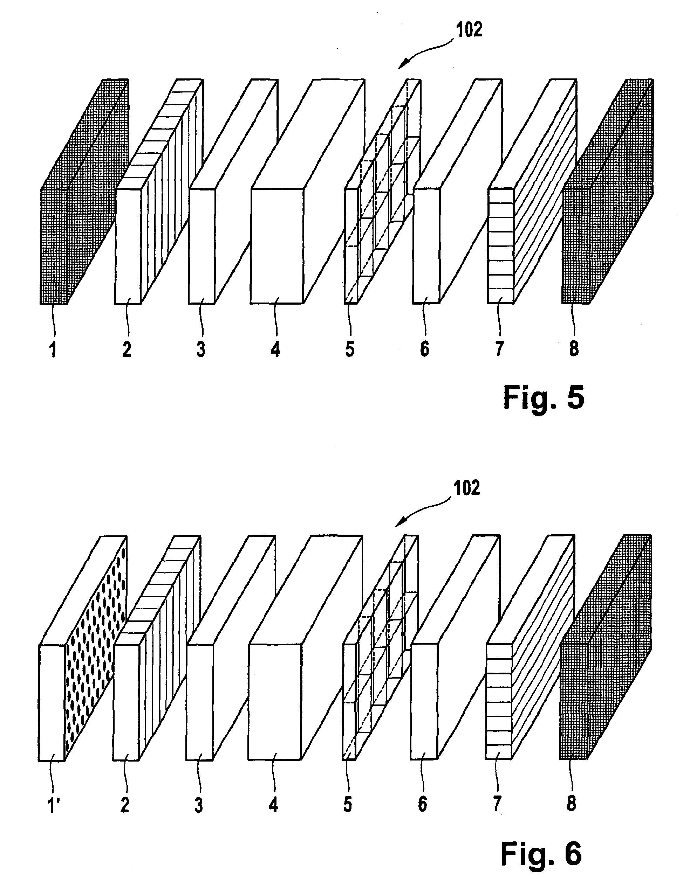

Die Figur 5 zeigt eine Ausführungsform einer erfindungsgemäßen Anzeigevorrichtung 102 basierend auf einem monochromen Flüssigkristall LC-Display mit Infrarot-Filter (IR-Filter) 8. Die Anzeigevorrichtung 102 hat einen Reflektor 1, vor dem ein Polarisator 2 einer ersten Polarisationsrichtung angeordnet ist. Auf dem Polarisator 2 folgt ein Substrat 3 mit einer transparenten Rückelektrode. Auf dem Substrat 3 befindet sich eine flüssigkristalline Schicht 4, auf der sich eine strukturierte Elektrode 5 befindet.

In der hier gezeigten Ausführungsform beinhaltet die strukturierte Elektrode 5 acht ansteuerbare Teilelektroden, die entsprechenden Bildpunkten, so genannten Pixeln, der Anzeigevorrichtung 102 entsprechen. Auf der Elektrode 5 befindet sich ein transparentes Substrat 6, gefolgt von einem Polarisator 7 einer zweiten Polarisationsrichtung, die im Wesentlichen senkrecht auf der ersten Polarisationsrichtung des Polarisators 2 steht. Auf dem Polarisator 7 folgt ein Filter 8, der im Wesentlichen nur für IR-Strahlung transparent ist. Der Filter 8 kann integraler Bestandteil der Anzeigevorrichtung 102 sein. Der Filter 8 kann auch in einer der Schichten des Dokuments 100 realisiert sein, wie zum Beispiel in dem Teilbereich 107 der Vorderseite 3 des Dokuments 100 in der Ausführungsform der Figur 1.

Anstelle einer in der Figur 5 gezeigten reflektiven Ausführungsform, kann die Anzeigevorrichtung 102 basierend auf der LCD-Technologie auch transmissiv ausgebildet sein, wie in der Figur 6 dargestellt. In dieser Ausführungsform ist der Reflektor 1 durch einen Emitter 1' ersetzt, welcher zum Beispiel IR-Strahlung emittiert.

Nach einer weiteren Ausführungsform ist die Anzeigevorrichtung 102 als LED-Anzeige auf Basis von IR-LEDs ausgebildet, bevorzugt mit einer Emission im Bereich von 700 bis 3000 Im, besonders bevorzugt von 700 bis 1100 nm, insbesondere 750 bis 950 nm. Hierbei können sowohl anorganische, organische als auch Hybrid-LEDs eingesetzt werden.

Gemäß einer weiteren Ausführungsform ist die Anzeigevorrichtung 102 auf der Basis von UV-LEDs ausgebildet; bevorzugt wird eine Emission im Bereich von 190 bis 400 nm, besonders bevorzugt von 250 bis 400 nm. Hierbei können sowohl anorganische, organische als auch Hybrid-LEDs eingesetzt werden.

Gemäß einer weiteren Ausführungsform ist die Anzeigevorrichtung 102 als bistabile Anzeigevorrichtung ausgebildet, beispielsweise als Drehelement-Anzeige oder als elektrophoretische Anzeige, insbesondere als so genanntes elektronisches Papier, zum Beispiel auf E-Ink-Basis.

Eine solche Anzeigevorrichtung hat zum Beispiel Drehelemente, die die gleiche Farbe im sichtbaren Spektralbereich aufweisen, und die außerhalb des sichtbaren Spektralbereichs einen Kontrast erzeugen können, indem beispielsweise IR absorbierende und IR transparente oder reflektierende Drehelemente in der Drehelement-Anzeige vorhanden sind. Sowohl die IR transparenten oder reflektierenden als auch die IR absorbierenden Drehelemente können im sichtbaren Bereich im Wesentlichen absorbierend sein, d.h. die Farbe schwarz haben. Eine solche bistabile Anzeige hat insbesondere den Vorteil, dass nur für den Schaltvorgang Energie benötigt wird, wobei die Information auch noch nach Abschaltung der Energieversorgung angezeigt wird.

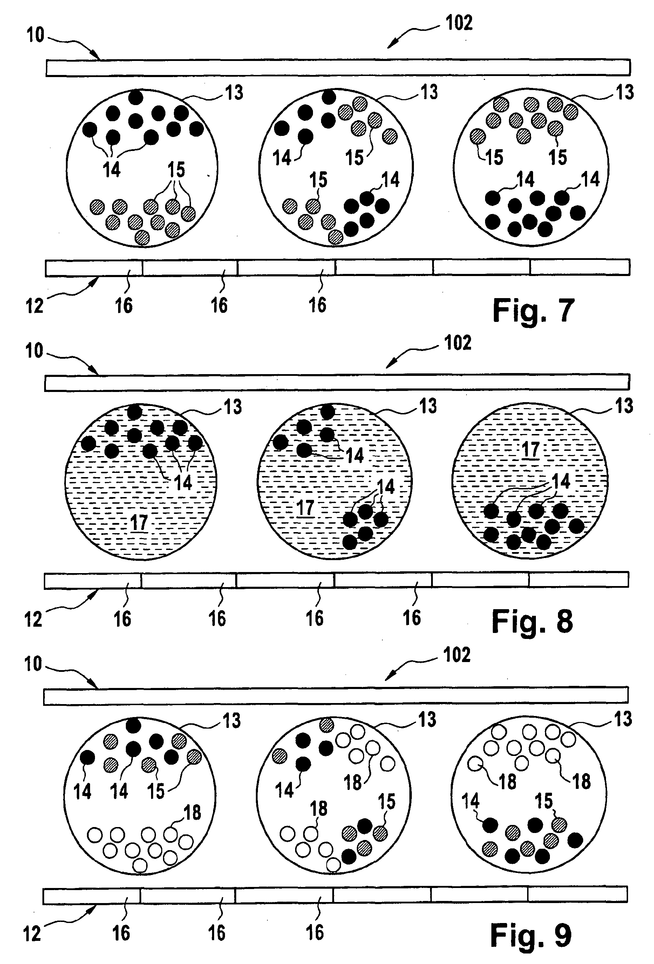

Die Figur 7 zeigt eine Ausführungsform der Anzeigevorrichtung 102 mit einem elektrophoretischen Display auf Basis der E-Ink-Technologie. Die Anzeigevorrichtung 102 hat an ihrer Vorderseite eine transparente Elektrode 10, die zum Beispiel im IR-Bereich oder zusätzlich auch im sichtbaren Bereich transparent ist. Ferner hat die Anzeigevorrichtung 102 eine strukturierte Rückelektrode 12 mit Teilelektroden 16, die zur Ansteuerung von zwischen den Elektroden 10 und 12 befindlichen Mikrosphären 13 ausgebildet sind. Die Mikrosphären 13 können alternativ auch als Mikrocups ausgebildet sein.

Innerhalb jeder der Mikrosphären 13 befinden sich IR absorbierende Partikel 14 und nicht IR absorbierende Partikel 15. Die Partikel 14 und 15 können sich innerhalb ihrer jeweiligen Mikrosphären 13 entweder in Richtung auf die Elektrode 10 oder in Richtung auf die Elektrode 12 bewegen, je nachdem weiches Potential an die betreffende Teilelektrode 16 angelegt wird. Bei den IR absorbierenden Partikel 14 kann es sich zum Beispiel um mit Ruß gefärbte Partikel handeln,

Die Partikel 15 haben im Wesentlichen dieselbe Farbe wie die Partikel 14, indem sie mit einer entsprechenden Mischung von CMY eingefärbt sind. Sowohl die Partikel 14 und 15 erscheinen also im sichtbaren Licht im wesentlichen schwarz, wohingegen bei Bestrahlung mit IR-Licht ein Kontrast dadurch entsteht, dass nur die Partikel 14 IR absorbierend sind, wohingegen die Partikel 15 IR transparent sind.

Die Figur 8 zeigt eine zu der Figur 7 alternative Ausführungsform der elektrophoretischen Anzeigevorrichtung 102 mit IR absorbierenden Partikeln 14, die sich in einer nicht IR absorbierenden Flüssigkeit 17 innerhalb der Mikrosphären 13 befinden. Innerhalb der Flüssigkeit 17 können sich die Partikel 14 je nach dem an der jeweiligen Teilelektrode 16 angelegten Potential bewegen, d.h. entweder in Richtung auf die Elektrode 10 oder in Richtung auf die Elektrode 12. Bei Bestrahlung der Anzeigevorrichtung 102 mit IR-Licht durch die Elektrode 10 lässt sich der Kontrastunterschied aufgrund der unterschiedlichen Anordnung der Partikel 14 in den Mikrosphären 13 detektieren.

In einer weiteren Ausführungsform sind die Partikel 14 nicht IR absorbierende, die Flüssigkeit 17 hingegen IR absorbierend.

Die Figur 9 zeigt eine Weiterbildung der elektrophoretischen Anzeigevorrichtung 102 der Figur 8. Bei dieser Ausführungsform beinhalten die Mikrosphären 13 zusätzlich Partikel 18, die eine andere Farbe als die Partikel 14 und 15 aufweisen, und die ebenfalls durch Ansteuerung der Teilelektroden 16 innerhalb der jeweiligen Mikrosphären 13 zwischen den Elektroden 10 und 12 beweglich sind. Beispielsweise haben die Partikel 18 einerseits und die Partikel 14, 15 andererseits entgegengesetzte elektrische Ladungen, sodass sich je nach Ansteuerung einer Teilelektrode 16 sich entweder die Partikel 18 oder die Partikel 14 und 15 innerhalb einer Mikrosphären 13 gruppierten. Aufgrund der unterschiedlichen Farbe der Partikel 14, 15 einerseits und der Partikel 18 andererseits, ergibt sich bei jedem Schaltvorgang ein anderes von der Anzeigevorrichtung 102 angezeigtes Muster, sodass die Funktion der Anzeigevorrichtung 102 sowie das Vorhandensein von verschiedenfarbigen Partikel zwar nicht durch einen Benutzer visuell, jedoch maschinell verifiziert werden kann.

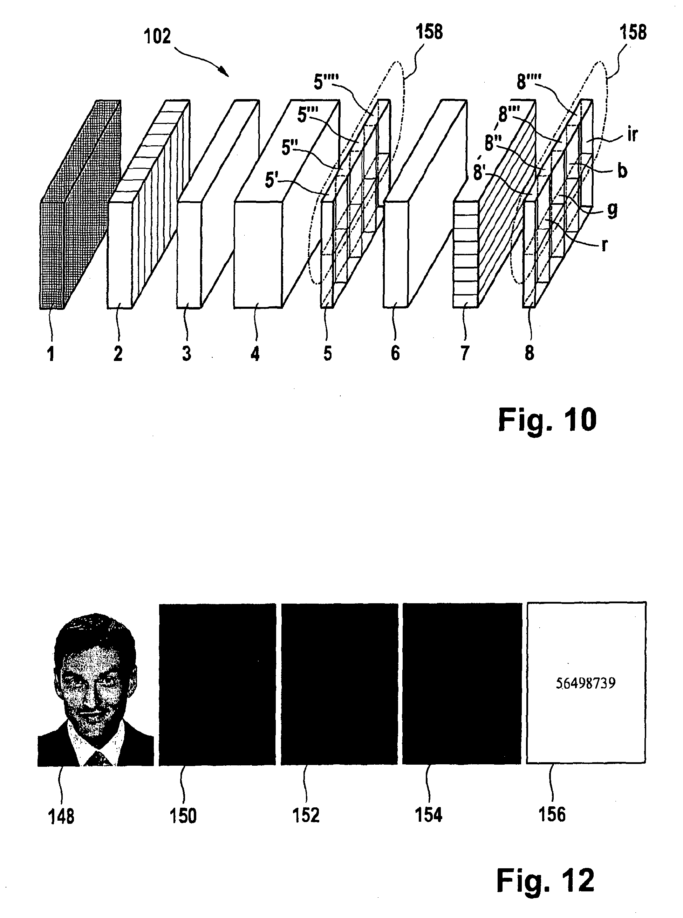

Die Figur 10 zeigt eine Weiterbildung der Ausführungsform der Anzeigevorrichtung 102 gemäß Figur 5. Bei dieser Ausführungsform handelt sich um ein Farb-LC-Display mit einem zusätzlichen Sub-PixeL Üblicherweise wird bei einem Farb-LC-Display nämlich jeder Pixel durch drei Sub-Pixel gebildet, zum Beispiel für die Farben blau, grün und rot Bei der hier betrachteten Ausführungsform hat jeder Pixel einen zusätzlichen Sub-Pixel zur Abstrahlung eines maschinenlesbaren Signals in einem visuell nicht wahrnehmbaren spektralen Bereich,

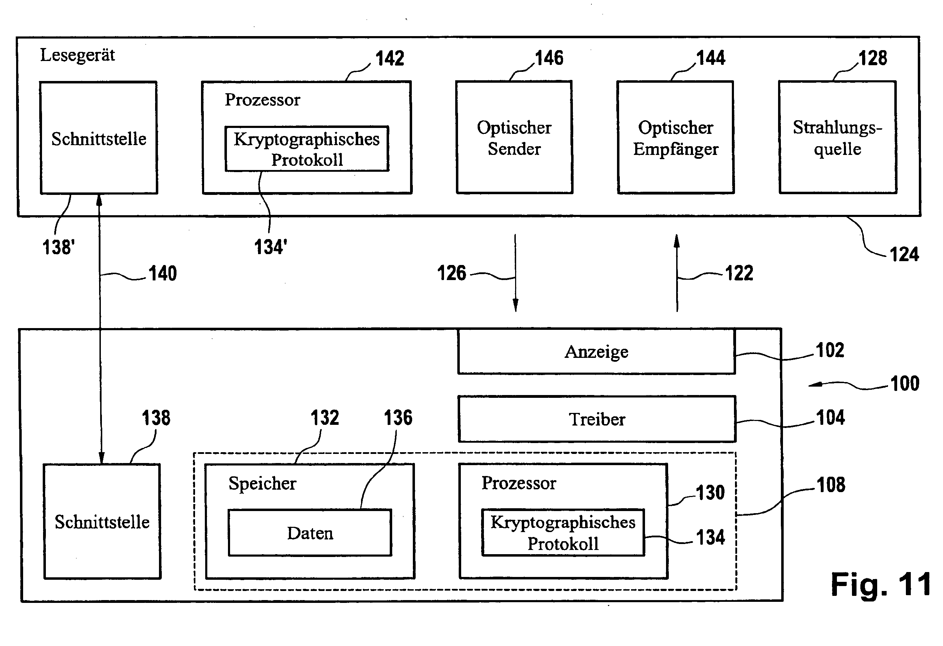

Beispielsweise wird ein Pixel 158 der Anzeigevorrichtung 102 durch die Teilelektroden 5', 5", 5'" und 5"" gebildet, die den Spektralkomponenten blau, grün, rot und IR entsprechen. Vor diesen Teilelektroden befinden sich entsprechende Farbfilter 8', 8", 8'", 8"", die rotes, grünes, blaues bzw. IR-Licht durchlassen. Bei dem Filter 8"" kann es sich zum Beispiel um einen Langpass-Filter handeln. Analog zu der Ausführungsform der Figur 11 kann auch eine Farb-LED-Anzeige mit vier Sub-Pixeln für jeden Pixel realisiert werden.

Die Figur 11 zeigt eine Ausführungsform des Dokuments 100 mit einem Prozessor 130 und einem elektronischen Speicher 132. Der Prozessor 130 und der Speicher 132 können als ein integrierter elektronischer Schaltkreis 108 realisiert sein. Auch der Treiber 104 kann als Teil des integrierten elektronischen Schaltkreises 108 realisiert sein. Der Prozessor 130 dient zur Ausführung von Programminstruktionen 134. Die Ausführung der Programminstruktionen 134 kann die das Dokument 100 betreffenden Schritte eines kryptographischen Protokolls enthalten. Der elektronische Speicher 132 dient zur Speicherung von Daten 136, wie zum Beispiel von Personalisierungsdaten.

Das Dokument 100 hat eine Schnittstelle 138 zum Aufbau einer Kommunikationsverbindung 140 mit einer entsprechenden Schnittstelle 138' des Geräts 124. Die Schnittstelle 138 ist vorzugsweise als RFID-Schnittstelle ausgebildet und beinhaltet eine Antenne 112 (vgl. die Ausführungsform der Figur 2).

Das Gerät 124 hat einen Prozessor 142 zur Ausführung von Programminstruktionen 134'. Durch Ausführung: der Programminstruktionen 134' werden die das Gerät 124 betreffenden Schritte des kryptographischen Protokolls ausgeführt.

Das Gerät 124 hat einen optischen Empfänger 144 zum Empfang des maschinenlesbaren optischen Signals 122 von der Anzeigevorrichtung 102. Bei dem optischen Empfänger 144 handelt es sich zum Beispiel um einen CCD-Sensor, der in dem visuell nicht wahrnehmbaren spektralen Bereich sensitiv ist.

Das Gerät 124 hat ferner einen optischen Sender 146 für einen Lesestrahl 126 zum Lesen der Anzeige, die von der Anzeigevorrichtung generiert wird. Hierbei kann es sich Beispielsweise um eine Lampe, eine LED oder einen Laser handeln. Der Lesestrahl beinhaltet den visuell nicht wahrnehmbaren spektralen Bereich; vorzugsweise ist der Lesestrahl auf den visuell nicht wahrnehmbaren spektralen Bereich beschränkt, so dass die Tatsache, dass das Dokument 100 mit dem Lesestrahl beaufschlagt wird, nicht durch einen Benutzer visuell wahrnehmbar ist.

Aufgrund der Ausführung der Programminstruktionen 134 steuert der Prozessor 130 den Treiber 104 zur Ausgabe des optischen Signals 122 an, wobei der Prozessor 130 dem optischen Signal die auszugebende Information aufmoduliert, beilspielsweise mit Hilfe einer Amplituden-, Pulsweiten-, Phasen- und/oder Frequenzmodulation. Bei dem optischen Signal 122 kann es sich um ein serielles oder ein paralleles optisches Signal handeln. Ferner können auch mehrere optische Signale 122 gleichzeitig oder zeitlich nacheinander über die Anzeige 102 ausgegeben werden. Bei der Ausgabe des optischen Signals 122 werden ein oder mehrere der Segmente der Anzeige 102 (vgl. Segmente 114, 116, 118 und 120, Figuren 3 und 4) angesteuert werden.

Ebenso kann der Prozessor 130 aufgrund der Ausführung der Programminstruktionen 134 den Treiber 104 zur Ansteuerung der Anzeige 102 für die Erfassung des optischen Signals 126 ansteuern. Die dadurch erhaltenen Informationen können durch den Prozessor 130 weiterverarbeitet werden, um auf dieser Grundlage beispielsweise ein oder mehrere weitere optische Signale 120 zu generieren und über die Anzeige 102 auszugeben.

Die Datenübertragung zwischen dem Dokument 100 und dem Gerät 124 kann sowohl seriell als auch parallel erfolgten. Im ersten Fall wird die Information durch eine zeitliche Veränderung des auf der Anzeige 102 dargestellten Inhalts übertragen und im zweiten Fall durch die örtliche Auflösung der auf der Anzeige 102 dargestellten Information, Zum Austausch größerer Datenmengen können auch die serielle und die parallele Datenübertragung miteinander kombiniert werden.

Der Aufbau der Anzeige 102 kann vollflächig sein, zum Beispiel um eine 1-Bit-Information zu übertragen, oder die Anzeige kann als segmentiertes Display, als Passivmatrixdisplay oder als Aktivmatrixdisplay ausgebildet sein.

Das Dokument 100 muss nicht über eine eigene Energieversorgungsquelle, wie zum Beispiel eine Batterie verfügen. Die Energieversorgung kann beispielsweise über die Schnittstelle 138 erfolgen. Beispielsweise wird in die Schnittstelle 138 von der Schnittstelle 138' des Geräts 124 elektrische Energie eingekoppelt, die zur Versorgung des integrieren elektronischen Schaltkreises 108, des Treibers 104 und/oder der Anzeige 102 dient. Dies ist insbesondere vorteilhaft, um die Funktionsfähigkeit des Dokuments über seine gesamte Laufzeit hin zu gewährleisten. Von besonderem Vorteil ist dabei, wenn die Schnittstelle 138 als kontaktlose Schnittstelle ausgebildet ist, da dann auch das Problem der Korrosion und Abnutzung der Kontakte der Schnittstelle über die Laufzeit des Dokuments entfällt.

Bei den in dem elektronischen Speicher 132 gespeicherten Daten 136 des Dokuments 100 kann es sich um Personalisierungsdaten handeln, wie zum Beispiel den Namen, die Adresse, ein Gesichtsbild, Fingerabdruckdaten und eine Unterschrift des Trägers des Dokuments. Die Ausgabe dieser Daten in Form des optischen Signals 122 und/oder über die Schnittstelle 138 aus dem Dokument 100 kann an die Bedingung der vorherigen erfolgreichen Durchführung des kryptographischen Protokolls geknüpft sein.

Zum Lesen der Daten 136 mit Hilfe des Geräts 124 wird beispielsweise wie folgt vorgegangen;

Das Dokument 100 wird in die Nähe des Geräts 124 gebracht, so dass elektrische Energie in das Dokument über dessen Schnittstelle 138 eingekoppelt wird. Dadurch wird die Ausführung der Programminstruktionen 134 durch den Prozessor 130 gestartet. Durch Ausführung der Programminstruktionen 134 wird eine Kennung, wie zum Beispiel eine Zufaltszahl, generiert Die Kennung wird über die Anzeige 102 durch entsprechende Modulation des optischen Signals 122 ausgegeben und mit Hilfe des optischen Empfängers 144 des Geräts 124 empfangen.

Durch Ausführung der Programminstruktionen 134' bewirkt der Prozessor 142 daraufhin, dass aus der so empfangenen Kennung und einem geheimen Schlüssel ein weiterer Schlüssel gewonnen wird, der für die Durchführung des kryptographischen Protokolls verwendet wird. Beispielsweise wird auf diese Art und Weise ein symmetrischer oder ein asymmetrischer Schlüssel generiert, der für die erfolgreiche Durchführung des kryptographischen Protokolls erforderlich ist.

In einer Ausführungsform der Erfindung wird beispielsweise aus der Kennung und einem geheimen Schlüssel ein asymmetrisches Schlüsselpaar bestehend aus einem geheimen und einem öffentlichen Schlüssel generiert. Der öffentliche Schlüssel wird daraufhin von dem Gerät 124 über dessen Schnittstelle 138' und die Kommunikationsverbindung 140 oder dessen optischen Sender 146 als optisches Signal 126 an das Dokument 100 übertragen. Dieser öffentliche Schlüssel wird beispielsweise zur anschließenden Durchführung eines Challenge-Response-Verfahrens verwendet.

Nachdem das kryptographische Protokoll erfolgreich abgearbeitet worden ist, werden die Daten 136 von dem Prozessor 130 aus dem elektronischen Speicher 132 ausgelesen und ganz oder teilweise auf der Anzeige 102 im Klartext angezeigt und/oder als maschinenlesbares optisches Signal 122 und/oder über die Kommunikationsverbindung 140 an das Gerät 124 übertragen,

Die Anzeigevorrichtung 102 des Dokuments 100 kann beispielsweise gemäß der Ausführungsform der Figur 10 ausgebildet sein. In diesem Fall ist der optische Empfänger 144 für den Empfang auf vier Kanälen ausgebildet, nämlich zum Empfang von Teilbildern im roten, grünen, blauen Spektralbereich und eines zusätzlichen Bildes außerhalb des visuell wahrnehmbaren spektralen Bereichs, beispielsweise also im IR- oder UV-Bereich.

Beispielsweise zeigt die Anzeigevorrichtung 102 ein Passbild 148 des Trägers des Dokuments 100. Das Passbild 148 ergibt sich, wie an sich im Stand der Technik üblich, aus verschiedenfarbigen Teilbildern, im Beispiel aus den Teilbildern 150, 152 und 154 in den blauen, grünen und roten Spektralbereichen, die in der Fig. 12 mit verschiedenen Grauwerten dargestellt sind.

Diese Teilbilder werden von dem optischen Empfänger 144, beispielsweise einer CCD-Kamera, empfangen und in an sich bekannter Art und Weise zu dem Passbild 148 rekombiniert, sodass es über eine Schnittstelle des Lesegeräts 124 angezeigt werden kann. Zusätzlich empfängt der optische Empfänger 144 ein Teilbild 156 mit einer schützenswerten und/oder geheim zu haltenden Information, beispielsweise einem kryptographischen Schlüssel, einer Transaktionsnummer oder dergleichen.

In dem hier betrachteten Beispielfall beinhaltet das Teilbild 156 die Angabe 56498739, die auf der Anzeigevorrichtung 102 für einen Benutzer nicht sichtbar ist, da diese außerhalb des visuell erfassbaren spektralen Bereichs abgestrahlt wird.

Zur Erfassung auch des Teilbilds 156 ist der optische Empfänger 144 beispielsweise als IR sensitive Kamera, zum Beispiel einer auf Si-Technik basierenden CCD- oder CMOS-Technik ausgebildet; beispielsweise hat die IR sensitive Kamera hierzu einen entsprechenden Langpass-Filter.

Falls die Abstrahlung des maschinenlesbaren optischen Signals 122 im UV-Bereich erfolgt, können analoge CCD- oder CMOS-Kameras eingesetzt werden. Im Falle von sehr hoch energetischer Strahlung können Konverterschichten auf diese aufgebracht werden.

Der optische Empfänger 144 kann beispielsweise einen Vierfach-Strahlungsteiler beinhalten. Jedes der so erhaltenen Bilder wird einer unterschiedlichen optischen Filterung unterzogen, um so die Teilbilder 150 bis 156 zu erhalten.

Alternativ ist es auch möglich, dass der optische Empfänger 144 nur zur Erfassung des Teilbildes 156 im nicht sichtbaren Spektralbereich ausgebildet ist, da ja die visuelle Überprüfung der sichtbaren Komponenten des Passbildes 148 durch den Benutzer unmittelbar erfolgen kann, indem dieser die Anzeigevorrichtung 102 betrachtet.

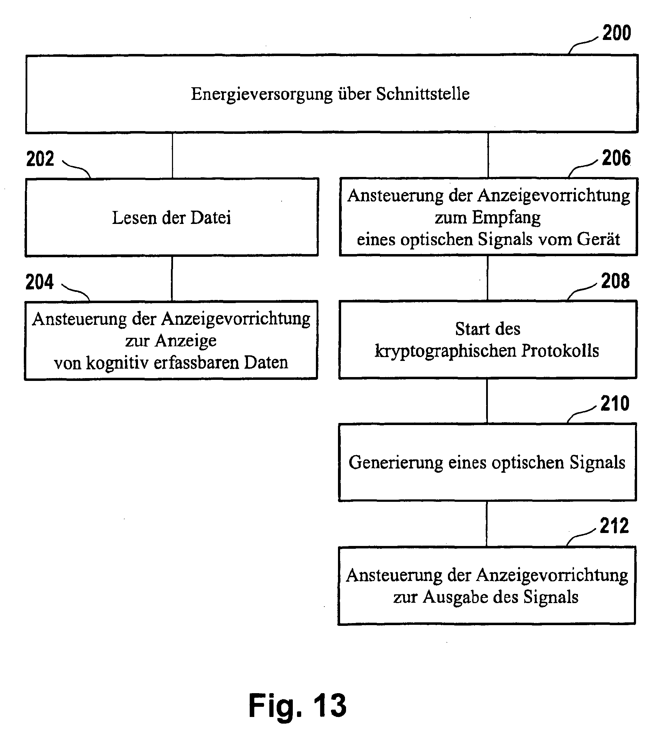

Die Figur 13 zeigt ein Flussdiagramm einer Ausführungsförm eines erfindungsgemäßen Verfahrens. In dem Schritt 200 wird elektrische Energie über die Schnittstelle des Dokuments eingekoppelt, beispielsweise von einem externen Schreib- und/oder Lesegerät. Daraufhin werden in dem Schritt 202 nicht oder nur wenig sensitive Daten aus einem elektronischen Speicher des Dokuments gelesen und in dem Schritt 204 auf einer Anzeigevorrichtung des Dokuments ausgegeben, wobei die Anzeige in einer für einen menschlichen Benutzer visuell und kognitiv ohne Weiteres erfassbaren Form, wie zum Beispiel im Klartext, erfolgt.

Nach dem Schritt 200 wird ferner ein Schritt 206 durchgeführt, in dem die Anzeigevorrichtung des Dokuments zum Empfang eines optischen Signals von dem externen Gerät angesteuert wird. Aufgrund der von dem externen Gerät über das optische Signal empfangenen Informationen wird in dem Schritt 208 ein kryptographisches Protokoll gestartet. Alternativ oder zusätzlich erfolgt der Empfang eines Signals von dem Lesegerät durch die Schnittstelle 138, wobei aufgrund des Empfangs des Signals das kryptographisches Protokoll gestartet wird.

Nach erfolgreicher Durchführung des kryptographischen Protokolls werden in dem Schritt 210 sensitive Daten aus dem elektronischen Speicher des Dokuments geleisen wie zum Beispiel Fingerabdruckdaten, und es wird ein entsprechendes maschinentesbares optisches Signal generiert, weiches durch entsprechende Ansteuerung der Anzeigevorrichtung in dem Schritt 212 zum Empfang durch das externe Gerät in einem visuell nicht wahrnehmbaren spektralen Bereich ausgegeben wird.

In einer weiteren Ausführungsform wird zunächst über die Schnittstelle des Dokuments Energie eingekoppelt, und eine Kommunikation zum Prozessor des Lesegeräts hergestellt. Nach optionaler Durchführung eines kryptographischen Protokolls wird die Information auf dem Anzeigeelement in einem visuell nicht wahrnehmbaren spektralen Bereich ausgegeben..

### Bezugszeichenliste

- 1: Reflektor
- 1': Emitter
- 2: Polarisator
- 3: Substrat
- 4: Schicht
- 5: Teilelektrode
- 5': Teilelektrode
- 5": Teilelektrode
- 5"': Teilelektrode
- 5"": Teilelektrode
- 6: Substrat
- 7: Polarisator
- 8: Filter
- 8': Filter
- 8": Filter
- 8'": Filter
- 8"': Filter
- 10: Elektrode
- 12: Elektrode
- 13: Mikrosphäre
- 14: Partikel
- 15: Partikel
- 16: Teilelektrode
- 17: Flüssigkeit
- 18: Partikel
- 100: Dokument
- 101: Inlay
- 102: Anzeigevorrichtung
- 103: Vorderseite
- 104: Treiber
- 105: Rückseite
- 106: Datenleitung
- 108: integrierter elektronischer Schaltkreis
- 109: Öffnung
- 110: Modul
- 112: Antenne
- 114: Segment
- 116: Segment
- 118: Segment
- 120: Segment
- 122: optisches Signal
- 124: Gerät
- 126: Lesestrahl
- 128: Strahlungsquelle
- 130: Prozessor
- 132: Speicher
- 134: Programminstruktionen
- 134': Programminstruktionen
- 136: Daten
- 138: Schnittstelle
- 140: Kommunikationsverbindung
- 142: Prozessor
- 144: Empfänger
- 146: Sender
- 148: Passbild
- 150: Teilbild
- 152: Teilbild
- 154: Teilbild
- 156: Teilbild

## Patentansprüche

1. Dokument mit einer Anzeigevorrichtung (102) zur Bildwiedergabe in einem visuell wahrnehmbaren spektralen Bereich, wobei die Anzeigevorrichtung als optischer Sender (102) zur Ausgabe mindestens eines maschinenlesbaren optischen Signals in einem visuell nicht wahrnehmbaren spektralen Bereich ausgebildet ist, **dadurch gekennzeichnet, dass** die Anzeigevorrichtung Pixel (158) aufweist, wobei zumindest eine Teilmenge der Pixel jeweils einen Sub-Pixel (5"", 8"") zur Ausgabe des maschinenlesbaren optischen Signals oder mehrerer maschinenlesbarer optischer Signale in dem visuell nicht wahrnehmbaren spektralen Bereich aufweist.

2. Dokument nach Anspruch 1, mit einem Filter (8, 8"") zum Durchlass der Strahlung in dem visuell nicht wahrnehmbaren spektralen Bereich.

3. Dokument mit einer Anzeigevorrichtung (102) zur Bildwledergabe In einem visuell wahrnehmbaren spektralen Bereich, wobei die Anzeigevorrichtung als optischer Sender (102) zur Ausgabe mindestens eines maschinenlesbaren optischen Signals in einem visuell nicht wahrnehmbaren spektralen Bereich ausgebildet ist, dadurch gekennzeichet, dass die Anzeigevorrichtung erste (14) und zweite (15) Anzeigeelemente aufweist, die in einem visuell wahrnehmbaren spektralen Bereich im Wesentlichen dieselbe Farbe haben, und wobei nur die ersten Anzeigeelemente in dem nicht wahrnehmbaren spektralen Bereich absorbierend wirken.

4. Dokument nach Anspruch 3, mit dritten Anzeigeelementen (15), die eine andere Farbe aufweisen

5. Dokument mit einer Anzeigevorrichtung (102) zur Bildwiedergabe in einem visuell wahrnehmbaren spektralen Bereich, wobei die Anzeigevorrichtung als optischer Sender (102) zur Ausgabe mindestens eines maschinenlesbaren optischen Signals in einem visuell nicht wahrnehmbaren spektralen Bereich ausgebildet ist, **dadurch gekennzeichnet, dass** die Anzeigevorrichtung Anzeigeelemente (14) aufweist, die in dem nicht visuell wahrnehmbaren Bereich absorbierend wirken, und die sich in einer Flüssigkeit (17) befinden, wobei die Flüssigkeit in dem visuell nicht wahrnehmbaren spektralen Bereich transparent ist.

6. Dokument nach einem der vorhergehenden Ansprüche, wobei der optische Sender zur Abstrahlung des optischen Signals in einem Infrarot- (IR) und/oder ultravioletten (UV) Bereich ausgebildet ist.

7. Dokument nach einem der vorhergehenden Ansprüche, wobei das Dokument einen Dokumentenkörper (101, 103, 105) hat, in den die Anzeigevorrichtung integriert ist.

8. Dokument nach einem der vorhergehenden Ansprüche, wobei es sich bei der Anzeigevorrichtung um eine LED-Anzeige, LCD-Anzeige, eine bistabile Anzeige, insbesondere eine elektrophoretische Anzeige oder eine Drehelement-Anzeige, und/oder eine semi-bistabile Anzeige, zum Beispiel eine elektrochrome Anzeige, handelt.

9. Dokument nach einem der vorhergehenden Ansprüche, wobei die Anzeigevorrichtung emissiv, reflektiv oder transmissiv ist.

10. Dokument nach einem der vorhergehenden Ansprüche, wobei es sich um ein Wert- oder Sicherheitsdokument handelt, beispielsweise ein Ausweisdokument, insbesondere einen Personalausweis, einen Reisepass, ein Visum oder einen Firmenausweis, eine Kreditkarte, einen Führerschein, einen Berechtigungsnachweis oder dergleichen.

11. Lesegerät mit einem Dokument nach einem der vorhergehenden Ansprüche, wobei das Lesegerät zum Empfang des maschinenlesbaren optischen Signals des Dokuments ausgebildet ist.

12. Lesegerät nach Anspruch 11, mit Mitteln (144) zur Erfassung des maschinenlesbaren optischen Signals oder maschinenlesbaren optischen Signale, die von Sub-Pixeln des optischen Senders (102) abgestrahlt werden.

13. Kommunikationsverfahren für ein Dokument (100) nach einem der vorhergehenden Ansprüche 1 bis 10, wobei eine Datenausgabe durch Ausgabe eines maschinenlesbaren optischen Signals in einem visuell nicht wahrnehmbaren spektralen Bereich durch den optischen Sender (102) des Dokuments erfolgt.

14. Kommunikationsverfahren nach Anspruch 13, wobei mit dem optischen Signal eine Information empfangen wird, die für die Durchführung eines kryptographischen Protokolls verwendet wird.

## Claims

1. A document, comprising a display apparatus (102) for image reproduction in a visually perceptible spectral range, wherein the display apparatus is formed as an optical transmitter (102) for outputting at least one machine-readable optical signal in a visually imperceptible spectral range, **characterised in that** the display apparatus comprises pixels (158), wherein at least some of the pixels have a sub-pixel (5"", 8"") for outputting the machine-readable optical signal or a plurality of machine-readable optical signals in the visually imperceptible spectral range.

2. The document according to Claim 1, comprising a filter (8, 8"") for allowing the passage of radiation in the visually imperceptible spectral range.

3. A document, comprising a display apparatus (102) for image reproduction in a visually perceptible spectral range, wherein the display apparatus is formed as an optical transmitter (102) for outputting at least one machine-readable optical signal in a visually imperceptible spectral range, **characterised in that** the display apparatus comprises first (14) and second (15) display elements, which have substantially the same colour in a visually perceptible spectral range, and wherein only the first display elements act in an absorbing manner in the imperceptible spectral range.

4. The document according to Claim 3, comprising third display elements (15), which have another colour.

5. A document, comprising a display apparatus (102) for image reproduction in a visually perceptible spectral range, wherein the display apparatus is formed as an optical transmitter (102) for outputting at least one machine-readable optical signal in a visually imperceptible spectral range, **characterised in that** the display apparatus comprises display elements (14), which act in an absorbing manner in the visually imperceptible range and which are located in a liquid (17), wherein the liquid is transparent in the visually imperceptible spectral range.

6. The document according to one of the preceding claims, wherein the optical transmitter is designed for radiation of the optical signal in an infrared (IR) and/or ultraviolet (UV) range.

7. The document according to one of the preceding claims, wherein the document has a document body (101, 103, 105), in which the display apparatus is integrated.

8. The document according to one of the preceding claims, wherein the display apparatus is an LED display, LCD display, a bistable display, in particular an electrophoretic display or a rotary element display, and/or a semi-bistable display, for example an electrochromic display.

9. The document according to one of the preceding claims, wherein the display device is emissive, reflective or transmissive.

10. The document according to one of the preceding claims, wherein said document is a value or security document, for example an identification document, in particular a personal identity card, a passport, a visa or a corporate identification card, a credit card, a driver's licence, a credential or the like.

11. A reading device comprising a document according to one of the preceding claims, wherein the reading device is designed to receive the machine-readable optical signal of the document.

12. The reading device according to Claim 11, comprising means (144) for detecting the machine-readable optical signal or machine-readable optical signals radiated by sub-pixels of the optical transmitter (102).

13. A communication method for a document (100) according to one of preceding Claims 1 to 10, wherein a data output occurs by outputting a machine-readable optical signal in a visually imperceptible spectral range by means of the optical transmitter (102) of the document.

14. The communication method according to Claim 13, wherein information is received with the optical signal and is used to carry out a cryptographic protocol.

## Revendications

1. Document avec un dispositif d'affichage (102) pour la reproduction d'images dans une plage spectrale visuellement perceptible, dans lequel le dispositif d'affichage est conçu comme un émetteur optique (102) pour l'émission d'au moins un signal optique lisible par machine dans une plage spectrale visuellement imperceptible, **caractérisé en ce que** le dispositif d'affichage comporte des pixels (158), où au moins une quantité partielle des pixels comporte respectivement un sous-pixel (5"", 8"") pour l'émission du signal optique lisible par machine ou de plusieurs signaux optiques lisibles par machine dans la plage spectrale visuellement imperceptible.

2. Document selon la revendication 1, avec un filtre (8, 8"") pour le passage du rayonnement dans la plage spectrale visuellement imperceptible.

3. Document avec un dispositif d'affichage (102) pour la reproduction d'images dans une plage spectrale visuellement perceptible, dans lequel le dispositif d'affichage est conçu comme un émetteur optique (102) pour l'émission d'au moins un signal optique lisible par machine dans une plage spectrale visuellement imperceptible, **caractérisé en ce que** le dispositif d'affichage comporte des premiers (14) et des deuxièmes (15) éléments d'affichage présentant essentiellement les mêmes couleurs dans une plage spectrale visuellement perceptible, et dans lequel seuls les premiers éléments d'affichage agissent de façon absorbante dans la plage spectrale visuellement imperceptible.

4. Document selon la revendication 3, avec des troisièmes éléments d'affichage (15) présentant une autre couleur.

5. Document avec un dispositif d'affichage (102) pour la reproduction d'images dans une plage spectrale visuellement perceptible, dans lequel le dispositif d'affichage est conçu comme un émetteur optique (102) pour l'émission d'au moins un signal optique lisible par machine dans une plage spectrale visuellement imperceptible, **caractérisé en ce que** le dispositif d'affichage comporte des éléments d'affichage (14) agissant de façon absorbante dans la plage spectrale visuellement imperceptible et se trouvant dans un liquide (17), dans lequel le liquide est transparent dans la plage spectrale visuellement imperceptible.

6. Document selon l'une des revendications précédentes, dans lequel l'émetteur optique pour l'émission du signal optique est conçu dans une plage infrarouge (IR) et/ou dans une plage ultraviolette (UV).

7. Document selon l'une des revendications précédentes, dans lequel le document possède un corps de document (101, 103, 105) dans lequel est intégré le dispositif d'affichage.

8. Document selon l'une des revendications précédentes, dans lequel le dispositif d'affichage est un affichage à DEL, un affichage à LCD, un affichage bistable, en particulier un affichage électrophorétique ou un affichage à élément rotatif, et/ou un affichage semi-bistable, par exemple un affichage électrochrome.

9. Document selon l'une des revendications précédentes, dans lequel le dispositif d'affichage est émissif, réfléchissant ou transmissif.

10. Document selon l'une des revendications précédentes, dans lequel il s'agit d'un document de valeur ou de sécurité, par exemple un document d'identité, en particulier une carte d'identité, un passeport, un visa ou une carte d'entreprise, une carte de crédit, un permis de conduire, un justificatif d'identité ou similaires.

11. Dispositif de lecture avec un document selon l'une des revendications précédentes, dans lequel le dispositif de lecture est conçu pour recevoir le signal optique lisible par machine du document.

12. Dispositif de lecture selon la revendication 11, avec des moyens (144) pour la détection du signal optique lisible par machine ou des signaux optiques lisibles par machine émis par des sous-pixels de l'émetteur optique (102).

13. Procédé de communication pour un document (100) selon l'une des revendications précédentes 1 à 10, dans lequel une sortie de données est effectuée par l'émission d'un signal optique lisible par machine dans une plage spectrale visuellement imperceptible par l'émetteur optique (102) du document.

14. Procédé de communication selon la revendication 13, dans lequel le signal optique permet de recevoir une information utilisée pour l'exécution d'un protocole cryptographique.
